# EUROPÄISCHE PATENTSCHRIFT

(11) **EP 3 752 541 B1**
(45) Veröffentlichungstag und Bekanntmachung des Hinweises auf die Patenterteilung: **30.03.2022**
(21) Anmeldenummer: 19703687.4
(22) Anmeldetag: 05.02.2019
(51) Int. Cl.: C08F 18/08, C08F 218/08, C09D 131/04, C09J 131/04, D06B 1/02, C08L 29/04, C08F 2/20

(54) **FORMALDEHYDFREIE BINDEMITTEL-ZUSAMMENSETZUNG**
FORMALDEHYDE-FREE BINDER COMPOSITION
COMPOSITION LIANT SANS FORMALDÉHYDE

(43) Veröffentlichungstag der Anmeldung: 23.12.2020
(73) Patentinhaber: Wacker Chemie AG, 81737 München (DE)
(72) Erfinder: WÖLFLE, Heimo, 83278 Traunstein (DE); BAUERS, Florian, 84489 Burghausen (DE); POTHS, Holger, 84489 Burghausen (DE)
(74) Vertreter: Ege, Markus
(86) Internationale Anmeldenummer: PCT/EP2019/052740
(87) Internationale Veröffentlichungsnummer: WO 2020/160754

(56) Entgegenhaltungen:
- JP-A- 2008 297 523
- US-A- 4 332 850
- US-A1- 2013 149 929

## Beschreibung

Die Erfindung betrifft eine formaldehydfreie Bindemittel-Zusammensetzung und deren Verwendung zur Herstellung von textilen Flächengebilden.

Bindemittel-Zusammensetzungen für textile Flächengebilde enthalten als Bindemittel-Komponente im Allgemeinen Polymerisate auf Basis ethylenisch ungesättigter Monomere und liegen zumeist in wässriger Dispersion vor. Die Polymerisate enthalten üblicherweise Einheiten von vernetzenden Monomeren und können deswegen untereinander und gegebenenfalls auch mit Fasern vernetzen und damit zur Bildung von textilen Flächengebilden mit höherer Festigkeit beitragen. Dadurch kann eine dauerhafte Fixierung der Fasern sowie eine Erhöhung der Widerstandsfähigkeit der textilen Flächengebilde gegenüber mechanischer Belastung erreicht werden. Textile Flächengebilde sind auch bekannt unter dem Begriff Nonwovens und können beispielsweise nach dem Airlay-, Wetlay- oder Spunlay-Verfahren hergestellt werden.

In der industriellen Praxis haben sich bisher vorwiegend N-Methylolacrylamid-Einheiten (NMA)enthaltende Polymerisate als Bindemittel-Komponente durchgesetzt. N-Methylolacrylamid-Gruppen können mit den OH-Gruppen von Cellulose oder Stärke regieren und führen folglich zu kovalenten Bindungen zwischen Bindemittelpolymer und Faser. Nachteiligerweise wird im Zuge der Vernetzung derartiger Polymerisate Formaldehyd gebildet, was aus toxikologischen Gründen zu vermeiden ist. Zusätzlich enthalten solche Polymerisate in Folge ihrer Herstellung in vielen Fällen schon als Begleitstoff Formaldehyd, beispielsweise bei der Herstellung mittels Polymerisation unter Einsatz von Formaldehyd freisetzenden Initiatoren, wie Natriumformaldehydsulfoxylat.

Es besteht also Bedarf, den Formaldehyd-Gehalt in den Bindemittel-Zusammensetzungen zu minimieren und möglichst Formaldehyd-freie textile Flächengebilde auf effiziente Weise zugänglich zu machen.

In der EP 0 596 318 B1 wird zur Reduzierung des Formaldehyds in einer wässrigen Polymerdispersion bei der Polymerisation anstelle von Natriumformaldehydsulfoxylat Ascorbinsäure als Reduktionsmittel im Redox-Initiatorsystem verwendet. Die WO 2013/124417 A1 beschreibt einen NMA-haltigen Nonwovenbinder, bei dem die N-Methylolacrylamid-Monomereinheiten teilweise mit Acrylamid-Monomereinheiten ersetzt worden sind. Aus der WO 2017/189350 A1 ist die Verwendung von mit Polyvinylalkohol stabilisierten Vinylacetat-Ethylen-Copolymerisaten, mit einer Kombination aus N-Methylolacrylamid- und Acrylamid-Comonomereinheiten, bekannt. Die WO 2013/085764 A1 beschreibt ein Faserbindemittel auf der Basis einer mit Polyvinylalkohol stabilisierten Vinylacetat-Ethylen-Copolymerdispersion, welche kein N-Methylolacrylamid enthält, und zur Verbesserung der Nassfestigkeit des Bindemittels Ammoniumchlorid enthält. Ein Nonwovenbinder in Form einer wässrigen, emulgatorstabilisierten Dispersion eines Vinylacetat-Ethylen-Copolymerisats mit N-Butoxymethyl-Acrylamid- und Acrylamid-Monomereinheiten beschreibt die EP 0 609 849 A1. Die EP 0 184 153 B1 beschreibt formaldehydfreie, mit anionischem Emulgator stabilisierte Latexbindemittel auf der Basis von Acrylsäureester-Copolymerisaten mit Acrylamidund Dicarbonsäure-Monomereinheiten. Die JP 2008-297523 A beschreibt Klebemittel auf der Basis von mit Polyvinylalkohol stabilisierten Vinylacetat-Ethylen-Copolymerisaten, welche noch Comonomereinheiten enthalten, die sich von Acrylamid und Acrylsäure ableiten.

Der Erfindung lag die Aufgabe zugrunde ein wässriges Bindemittel zur Faserbindung zur Verfügung zu stellen, welches auch ohne Zugabe von Vernetzungskatalysator zu hoher Nassfestigkeit des Faserverbundes führt, ohne Formaldehyd freizusetzen. Gegenstand der Erfindung ist eine wässrige Bindemittel-Zusammensetzung zur Faserbindung, erhältlich mittels radikalisch initiierter Polymerisation von Vinylacetat und Ethylen, in Gegenwart von Polyvinylalkohol in wässrigem Medium, dadurch gekennzeichnet, dass
a) 60 bis 94 Gew.-% Vinylacetat,
b) 5 bis 30 Gew.-% Ethylen,
c) 0,4 bis 5 Gew.-% Acrylamid und/oder Methacrylamid,
d) 0,4 bis 5 Gew.-% Acrylsäure und/oder Methacrylsäure,
e) 0,2 bis 2 Gew.-% Maleinsäureanhydrid und/oder Maleinsäure, in Gegenwart eines Polyvinylalkohols mit einem Hydrolysegrad von 80 bis 99 Mol-% copolymerisiert werden,
wobei gegebenenfalls die Comonomere c) und e) ganz oder teilweise mit Maleinamidsäure ersetzt werden,
wobei sich die Angaben in Gew.-% jeweils auf das Gesamtgewicht der Comonomere beziehen und sich jeweils auf 100 Gew.-% aufaddieren.

Vorzugsweise werden a) 70 bis 85 Gew.-% Vinylacetat, bezogen auf das Gesamtgewicht der Comonomere, copolymerisiert.

Vorzugsweise werden b) 15 bis 28 Gew.-% Ethylen, bezogen auf das Gesamtgewicht der Comonomere, copolymerisiert.

Vorzugsweise werden c) 0,5 bis 2 Gew.-%, besonders bevorzugt 0,7 bis 1,2 Gew.-% Acrylamid und/oder Methacrylamid, jeweils bezogen auf das Gesamtgewicht der Comonomere, copolymerisiert. Bevorzugt wird als Comonomer c) nur Acrylamid copolymerisiert.

Vorzugsweise werden d) 0,5 bis 2 Gew.-%, besonders bevorzugt 0,7 bis 1,2 Gew.-% Acrylsäure und/oder Methacrylsäure, jeweils bezogen auf das Gesamtgewicht der Comonomere, copolymerisiert. Bevorzugt wird als Comonomer d) nur Acrylsäure copolymerisiert.

Vorzugsweise werden e) 0,2 bis 1 Gew.-%, besonders bevorzugt 0,4 bis 0,6 Gew.-% Maleinsäureanhydrid und/oder Maleinsäure, jeweils bezogen auf das Gesamtgewicht der Comonomere, copolymerisiert. Bevorzugt wird als Comonomer e) nur Maleinsäureanhydrid copolymerisiert.

Am meisten bevorzugt betragen die Gewichtsverhältnisse von Comonomeranteil c) : Comonomeranteil d) : Comonomeranteil e) etwa 1 : 1 : (0,5 bis 1).

Die Polymerisate sind erhältlich mittels radikalisch initiierter Polymerisation. Die Herstellung der Polymerisate kann in an sich bekannter Weise beispielsweise nach dem Suspensionspolymerisationsverfahren oder vorzugsweise nach dem Emulsionspolymerisationsverfahren in Wasser erfolgen. Die Polymerisationstemperatur beträgt im Allgemeinen 20°C bis 120°C und es wird unter Druck, im Allgemeinen zwischen 5 bar und 100 bar, gearbeitet. Die Initiierung der Polymerisation kann mit den für die Emulsionspolymerisation oder Suspensionspolymerisation gebräuchlichen wasserlöslichen oder monomerlöslichen Initiatoren oder Redox-Initiator-Kombinationen erfolgen. Als Reduktionsmittel werden Ascorbinsäure, Isoascorbinsäure oder deren Salze oder formaldehydfreie Reduktionsmittel wie Brüggolith FF6 bevorzugt. Als Oxidationsmittel werden Persulfatverbindungen und Peroxidverbindungen bevorzugt, insbesondere Ammonium- oder Alkali-Persulfate oder Wasserstoffperoxid. Als Initiatoren werden vorzugsweise keine Formaldehyd-freisetzenden Substanzen, wie Formaldehydsulfoxylate, eingesetzt.

Die Polymerisation erfolgt in Gegenwart von vorzugsweise 1 bis 10 Gew.-%, bezogen auf das Gesamtgewicht der Comonomere, eines oder mehrerer Polyvinylalkohole mit einem Hydrolysegrad von jeweils 80 bis 99 Mol-%, vorzugsweise 85 bis 90 Mol-%, besonders bevorzugt 87 bis 89 Mol-%. Die Höppler-Viskosität in 4 %-iger wässriger Lösung der Polyvinylalkohole beträgt im Allgemeinen 2 bis 40 mPas, vorzugsweise 2 bis 15 mPas (Methode nach Höppler bei 20°C, DIN 53015). Die genannten Polyvinylalkohole sind im Handel erhältlich und mittels dem Fachmann bekannter Verfahren zugänglich.

Gegebenenfalls können zusätzlich noch geringe Mengen an Emulgatoren bei der Polymerisation verwendet werden, beispielsweise 0,1 bis 2,0 Gew.-%, bezogen auf das Gesamtgewicht der Comonomere. Vorzugsweise werden während der Polymerisation keine Emulgatoren verwendet. Die wässrigen Dispersionen haben im Allgemeinen einen Festgehalt von 40 bis 60 Gew.-% und bevorzugt 45 bis 55 Gew.-%. Die Brookfield-Viskosität der wässrigen Dispersionen beträgt vorzugsweise 50 bis 2000 mPas, besonders bevorzugt 100 bis 1500 mPas (bestimmt mit einem Brookfield-Viskosimeter bei 23°C bei 20 UPM bei einem Feststoffgehalt der Dispersionen von 49 bis 51 Gew.-%).

Die Bindemittel-Zusammensetzungen können auch ein oder mehrere Additive enthalten, beispielsweise Emulgatoren, wie Fettalkoholethoxylate mit niedrigen Ethoxylierungsgraden, insbesondere 2 bis 5, oder Di-Isotridecylsulfosuccinat oder deren Salze, wie Natriumsalze. Übliche Einsatzmengen an Emulgatoren betragen, bezogen auf das Trockengewicht des Polymerisats, 0 bis 1 Gew.-%, vorzugsweise 0 bis 0,6 Gew.-%. Mit Emulgatoren kann die Hydrophilie der mit solchen Bindemittel-Zusammensetzungen ausgerüsteten textilen Flächengebilde erhöht werden. Weitere Additive sind saure Katalysatoren, wie Ammoniumchlorid, Citronensäure oder Schwefelsäure. Saure Katalysatoren werden üblicherweise in Mengen von 0 bis 2 Gew.-%, vorzugsweise 0,1 bis 1 Gew.-% zugesetzt, bezogen auf das Trockengewicht des Polymerisats. Handelt es sich bei den sauren Katalysatoren um Brönstedt-Säuren, so wird von diesen so viel eingesetzt, dass ein pH-Wert von vorzugsweise 0 bis 4 und besonders bevorzugt von 2 bis 3 resultiert. Am meisten bevorzugt werden in der wässrigen Bindemittel-Zusammensetzung keine Katalysatoren verwendet.

Die erfindungsgemäße Verwendung zur Herstellung der textilen Flächengebilde erfolgt im Allgemeinen, indem Fasern mit einer oder mehreren erfindungsgemäßen, wässrigen Bindemittel-Zusammensetzung in Kontakt gebracht und anschließend getrocknet werden. Das Trocknen erfolgt vorzugsweise bei Temperaturen von ≤ 160°C, besonders bevorzugt 120 bis 160°C und am meisten bevorzugt bei 140 bis 160°C.

Die Fasern basieren im Allgemeinen auf natürlichen oder synthetischen, insbesondere organischen, Materialien. Beispiele hierfür sind Kunstfasern auf Basis von faserbildenden Polymeren wie Viskose-, Polyester-, Polyamid-, Polypropylen-, Polyethylen-Fasern. Beispiele für natürliche Fasermaterialien sind Holz-, Wolle-, Baumwolle-, Jute-, Flachs-, Hanf-, Kokos-, Ramie-, Sisal-Fasern und insbesondere Cellulose-Fasern. Die Fasern können lose oder auch in Form von Bündeln oder gewebten Textilien, Garnen oder vorzugsweise in Form von Nonwovens, wie Vliesen, Gelegen oder Gewirken, eingesetzt werden. Die Nonwovens können gegebenenfalls thermisch oder mechanisch vorverfestigt, beispielsweise genadelt, sein.

Die Fasern können beliebige Längen aufweisen, vorzugsweise 5 mm bis 100 mm, besonders bevorzugt 7 mm bis 75 mm und am meisten bevorzugt 10 mm bis 60 mm. Die Fasern können die üblichen Durchmesser haben, vorzugsweise Durchmesser von 0,1 µm bis 1 mm, besonders bevorzugt 0,5 µm bis 100 µm und am meisten bevorzugt 1 µm bis 50 µm.

Zur erfindungsgemäßen Herstellung der textilen Flächengebilde wird die wässrige Bindemittelzusammensetzung in einer Menge von vorzugsweise 1 bis 50 Gew.-%, besonders bevorzugt 10 bis 30 Gew.-% und am meisten bevorzugt 15 bis 25 Gew.-% eingesetzt, jeweils bezogen auf das Gesamtgewicht der Fasern. Der Anteil der Fasern beträgt vorzugsweise 40 bis 99 Gew.-%, besonders bevorzugt 60 bis 90 Gew.-% und am meisten bevorzugt 70 bis 80 Gew.-%, jeweils bezogen auf das Gesamtgewicht der textilen Flächengebilde.

Zur erfindungsgemäßen Herstellung der textilen Flächengebilde kann dabei so vorgegangen werden, dass vor der Verfestigung die Fasern flächenhaft ausgebreitet werden. Die Verfahren hierzu sind bekannt und primär von der Anwendung, in die das verfestigte Fasermaterial geht, abhängig. Die Fasern können beispielsweise mittels einer Luftlege-, Nasslege-, Direktspinnoder Krempelvorrichtung ausgelegt werden. Gegebenenfalls kann vor der Verfestigung mit Bindemittel noch mechanisch verfestigt werden, beispielsweise durch Kreuzlegen, Nadeln oder Wasserstrahlverfestigung. Anschließend kann die Bindemittel-Zusammensetzung auf die ausgelegten Fasern aufgebracht werden, wobei die Bindemittel-Zusammensetzungen flächenförmig, punktförmig oder musterartig aufgebracht werden kann. Anschließend können die Fasern durch Anwendung von Temperatur und gegebenenfalls Druck gebunden werden.

Die wässrige Bindemittel-Zusammensetzung eignet sich auch zur Herstellung von Laminaten, wobei zwei Faserlagen miteinander verklebt werden, oder eine Faserlage mit einem weiteren Substrat verklebt wird. Dabei kann so vorgegangen werden, dass eine Faserlage ausgelegt wird, wobei die Bindemittel-Zusammensetzung nach dem Auslegen aufgebracht wird, und eine weitere Faserlage, beispielsweise durch Luftlegen, aufgelegt wird. Statt der zweiten Faserlage kann auch ein anderes Substrat, beispielweise eine Kunststofffolie, aufgelegt werden. Anschließend erfolgt die Bindung durch Anwendung von Temperatur und gegebenenfalls Druck. Mit dieser Verfahrensweise werden beispielsweise Dämmstoffe aus Reißbaumwolle zugänglich, welche mit einem Faservlies als Deckvlies dauerhaft kaschiert sind.

Geeignet sind die Bindemittel-Zusammensetzungen auch zur Herstellung von voluminösen Vliesstoffen oder Watten, die beispielsweise als Halbzeuge für die Herstellung von Formteilen aus Fasermaterialien oder als Polster-, Isolier- und Filterwatten Verwendung finden. Dazu können die Bindemittel-Zusammensetzungen auf die Fasern aufgebracht und durch Temperaturerhöhung, bevorzugt in einem Formwerkzeug, verfestigt werden.

Bei den erfindungsgemäß hergestellten textilen Flächengebilden handelt es sich vorzugsweise um Vliesstoffe, insbesondere Tissues, Filze, Watten oder grobmaschige, lockere Gewebe, Gestricke oder Gewirke. Die textilen Flächengebilde können beispielsweise im Automobilsektor, für Haushaltsprodukte wie Tischdecken, Hygieneartikel, wie Toilettenpapier, in der Bekleidungsindustrie, für medizinische Textilien oder Geotextilien eingesetzt werden.

Die nachfolgenden Beispiele dienen der weiteren Erläuterung der Erfindung:
Bindemittel-Zusammensetzung:
Zur Testung wurden wässrige Dispersionen von Vinylacetat-Ethylen-Copolymer-Dispersionen mit einem Festgehalt von ca. 55 % hergestellt.

Die Herstellung erfolgte mittels Emulsionspolymerisation von 76 bis 78 Gew.-% Vinylacetat, 21 bis 22 Gew.-% Ethylen und den in Tabelle 1 angegebenen Mengen in Gew.-% von Acrylamid (AA), Acrylsäure (AS), Maleinsäureanhydrid (MSA), Maleinamidsäure (MAS) und N-Methylolacrylamid (NMA).

Die Polymerisation erfolgte jeweils in einem Druckreaktor in einem Temperaturintervall von 40 bis 75°C und bei einem Druck von bis zu 85 bar.

Es wurde in Gegenwart von 10 Gew.-%, bezogen auf das Gesamtgewicht der Comonomere, eines Polyvinylalkohols (PVOH) mit einer Höppler-Viskosität von 5 mPas (4%ige wässrige Lösung) und einem Hydrolysegrad von 88 Mol-% polymerisiert.

Zur Initiierung wurde Wasserstoffperoxid und Brüggolith FF6 eingesetzt.

**Tabelle 1:**

| Beispiel | AA (%) | AS (%) | MSA (%) | NMA (%) | MAS (%) | Stabilisierung |
|---|---|---|---|---|---|---|
| | | | | | | |
| Bsp. 1 | 1 | 1 | 0,5 | 0 | 0 | PVOH |
| Vbsp. 2 | 0 | 0 | 0 | 0 | 0 | PVOH |
| Vbsp. 3 | 0 | 0 | 0,5 | 0 | 0 | PVOH |
| Vbsp. 4 | 1 | 1 | 0 | 0 | 0 | PVOH |
| Vbsp. 5 | 0 | 0 | 0 | 1 | 0 | PVOH |
| Bsp. 6 | 0 | 1 | 0 | 0 | 1 | PVOH |
| Vbsp. 7 | 1 | 1 | 0 | 0 | 0 | Emulgator |
| Vbsp. 8 | 1 | 1 | 0,5 | 0 | 0 | Emulgator |

Bestimmung der Nassfestigkeitswerte für Airlaid-Vliesstoffe:
Auf ein thermisch vorgebundenes Airlaidvlies (75 g/m²; 88 % Fluff pulp und 12 % PP/PE-Bikomponentenfasern; 0,85 mm Dicke) wurde die mit Wasser auf einen Festgehalt von 20 % verdünnte Polymerdispersion des jeweiligen (Vergleichs)Beispiels mittels einer Sprühflotte mit einem halbautomatischen Sprühaggregat nach dem Airlessverfahren (Schlitzdüsen Unijet 8001 E; 5 bar) homogen beidseitig besprüht und anschließend in einem Labor-Durchlufttrockner (Mathis LTF; Fa. Mathis / CH) für 3 min bei 160°C getrocknet (Auftragungsmenge: 20 Gew.-% Polymer bezogen auf Gesamtgewicht aus Polymer und Vlies).

Pro Reißfestigkeitsprüfung wurden je 10 Vliesstreifen (20 cm Einspannlänge; 5 cm Einspannlänge) in Querrichtung zur Maschinenproduktionsrichtung angefertigt. Zur Messung der Nassreißfestigkeiten wurden die Streifenproben vor der Messung jeweils 1 min in Wasser gelagert.

Die Nassreißfestigkeiten wurden analog der DIN EN 29073 (Teil 3: Prüfverfahren für Vliesstoffe, 1992) bestimmt und die Messproben mittels einer Höchstzugkraftmessung an einer Zwick^{®} 1445-Prüfmaschine (100 N Messdose) mit einer TestXpert^{®}-Soft-ware Version 11.02 (Fa. Zwick Roell) bei einer Einspannlänge von 100±1 mm, einer Einspannbreite von 15±1 mm und bei einer Deformationsgeschwindigkeit von 150 mm/min durchgeführt.

Die Ergebnisse der Austestung sind in Tabelle 2 zusammengefasst.

**Tabelle 2:**

| Beispiel | AA(%) | AS(%) | MSA(%) | NMA(%) | MAS(%) | Nassfestigkeit (N/5cm)* |
|---|---|---|---|---|---|---|
| | | | | | | |
| Bsp. 1 | 1 | 1 | 0,5 | 0 | 0 | 1170 / 1120 |
| Vbsp. 2 | 0 | 0 | 0 | 0 | 0 | 361 / - |
| Vbsp. 3 | 0 | 0 | 0,5 | 0 | 0 | 861 / - |
| Vbsp. 4 | 1 | 1 | 0 | 0 | 0 | 556 / 609 |
| Vbsp. 5 | 0 | 0 | 0 | 1 | 0 | 1020 / 1570 |
| Bsp. 6 | 0 | 1 | 0 | 0 | 1 | 1158 / 1249 |
| Vbsp. 7 | 1 | 1 | 0 | 0 | 0 | 149 / - |
| Vbsp. 8 | 1 | 1 | 0,5 | 0 | 0 | 383 / 415 |

| | | | | | | |
|---|---|---|---|---|---|---|
| * = ohne Katalysator / mit 1% Zitronensäure, - = nicht gemessen | | | | | | |

Beispiel 1 zeigt, dass mit der erfindungsgemäßen BindemittelZusammensetzung hohe Nassreißfestigkeiten, selbst ohne Katalysatorzusatz, erhalten werden. Dies gilt auch für die Ausführungsform von Beispiel 6, in welcher Acrylamid und Maleinsäureanhydrid mit Maleinamidsäure substituiert wurden.

In NMA-haltigen Bindemittel-Zusammensetzungen, wie der von Vergleichsbeispiel 5, werden nur mit saurem Katalysator ähnlich hohe Werte erhalten, während ohne Katalysator die Nassreißfestigkeit ungenügend ist.

Im Unterschied zu der mit Polyvinylalkohol stabilisierten Bindemittel-Zusammensetzung in Beispiel 1 wurden mit der mit Emulgator stabilisierten Bindemittel-Zusammensetzung von Vergleichsbeispiel 7 und 8 nur ungenügende Werte erhalten.

## Patentansprüche

1. Wässrige Bindemittel-Zusammensetzung zur Faserbindung, erhältlich mittels radikalisch initiierter Polymerisation von Vinylacetat und Ethylen, in Gegenwart von Polyvinylalkohol in wässrigem Medium, **dadurch gekennzeichnet, dass**
a) 60 bis 94 Gew.-% Vinylacetat,
b) 5 bis 30 Gew.-% Ethylen,
c) 0,4 bis 5 Gew.-% Acrylamid und/oder Methacrylamid,
d) 0,4 bis 5 Gew.-% Acrylsäure und/oder Methacrylsäure,
e) 0,2 bis 2 Gew.-% Maleinsäureanhydrid und/oder Maleinsäure, in Gegenwart eines Polyvinylalkohols mit einem Hydrolysegrad von 80 bis 99 Mol-% copolymerisiert werden,
wobei gegebenenfalls die Comonomere c) und e) ganz oder teilweise mit Maleinamidsäure ersetzt werden,
wobei sich die Angaben in Gew.-% jeweils auf das Gesamtgewicht der Comonomere beziehen und sich jeweils auf 100 Gew.-% aufaddieren.

2. Wässrige Bindemittel-Zusammensetzung nach Anspruch 1, **dadurch gekennzeichnet, dass** a) 70 bis 85 Gew.-% Vinylacetat, bezogen auf das Gesamtgewicht der Comonomere, copolymerisiert werden.

3. Wässrige Bindemittel-Zusammensetzung nach Anspruch 1 oder 2, **dadurch gekennzeichnet, dass** b) 15 bis 28 Gew.-% Ethylen, bezogen auf das Gesamtgewicht der Comonomere, copolymerisiert werden.

4. Wässrige Bindemittel-Zusammensetzung nach Anspruch 1 bis 3, **dadurch gekennzeichnet, dass** c) 0,5 bis 2 Gew.-% Acrylamid, bezogen auf das Gesamtgewicht der Comonomere, copolymerisiert werden.

5. Wässrige Bindemittel-Zusammensetzung nach Anspruch 1 bis 4, **dadurch gekennzeichnet, dass** d) 0,5 bis 2 Gew.-% Acrylsäure, bezogen auf das Gesamtgewicht der Comonomere, copolymerisiert werden.

6. Wässrige Bindemittel-Zusammensetzung nach Anspruch 1 bis 5, **dadurch gekennzeichnet, dass** e) 0,2 bis 1 Gew.-% Maleinsäureanhydrid, bezogen auf das Gesamtgewicht der Comonomere, copolymerisiert werden.

7. Wässrige Bindemittel-Zusammensetzung nach Anspruch 1 bis 6, **dadurch gekennzeichnet, dass** die Gewichtsverhältnisse von Comonomeranteil c) : Comonomeranteil d) : Comonomeranteil e) etwa 1 : 1 : (0,5 bis 1) betragen.

8. Wässrige Bindemittel-Zusammensetzung nach Anspruch 1 bis 7, **dadurch gekennzeichnet, dass** in Gegenwart eines oder mehrerer Polyvinylalkohole mit einem Hydrolysegrad von 80 bis 99 Mol-% und einer Höppler-Viskosität in 4 %-iger wässriger Lösung von 2 bis 15 mPas (Methode nach Höppler bei 20°C, DIN 53015) copolymerisiert wird.

9. Verwendung einer wässrigen Bindemittel-Zusammensetzung nach Anspruch 1 bis 8 zur Herstellung von textilen Flächengebilden.

10. Verwendung nach Anspruch 9, wobei Fasern mit der wässrigen Bindemittel-Zusammensetzung in Kontakt gebracht und anschließend getrocknet werden.

11. Verwendung nach Anspruch 9 oder 10, **dadurch gekennzeichnet, dass** in der wässrigen Bindemittel-Zusammensetzung keine Katalysatoren enthalten sind.

## Claims

1. Aqueous binder composition for fibre bonding, obtainable by free-radically initiated polymerization of vinyl acetate and ethylene, in the presence of polyvinyl alcohol in aqueous medium, **characterized in that**
a) 60 to 94% by weight vinyl acetate,
b) 5 to 30% by weight ethylene,
c) 0.4 to 5% by weight acrylamide and/or methacrylamide,
d) 0.4 to 5% by weight acrylic acid and/or methacrylic acid,
e) 0.2 to 2% by weight maleic anhydride and/or maleic acid,are copolymerized in the presence of a polyvinyl alcohol having a degree of hydrolysis of 80 to 99 mol%,
wherein optionally the comonomers c) and e) are wholly or partly replaced by maleamic acid,
wherein the figures in % by weight refer in each case to the total weight of the comonomers and in each case add up to 100% by weight.

2. Aqueous binder composition according to Claim 1, **characterized in that** a) 70 to 85% by weight vinyl acetate, based on the total weight of the comonomers, are copolymerized.

3. Aqueous binder composition according to Claim 1 or 2, **characterized in that** b) 15 to 28% by weight ethylene, based on the total weight of the comonomers, are copolymerized.

4. Aqueous binder composition according to Claims 1 to 3, **characterized in that** c) 0.5 to 2% by weight acrylamide, based on the total weight of the comonomers, are copolymerized.

5. Aqueous binder composition according to Claims 1 to 4, **characterized in that** d) 0.5 to 2% by weight acrylic acid, based on the total weight of the comonomers, are copolymerized.

6. Aqueous binder composition according to Claims 1 to 5, **characterized in that** e) 0.2 to 1% by weight maleic anhydride, based on the total weight of the comonomers, is copolymerized.

7. Aqueous binder composition according to Claims 1 to 6, **characterized in that** the ratios by weight of comonomer fraction c) : comonomer fraction d) : comonomer fraction e) are approximately 1 : 1 : (0.5 to 1).

8. Aqueous binder composition according to Claims 1 to 7, **characterized in that** copolymerization takes place in the presence of one or more polyvinyl alcohols having a degree of hydrolysis of 80 to 99 mol% and a Höppler viscosity in 4% aqueous solution of 2 to 15 mPas (method according to Höppler at 20°C, DIN 53015).

9. Use of an aqueous binder composition according to Claims 1 to 8 for producing textile sheet-like structures.

10. Use according to Claim 9, wherein fibres are brought into contact with the aqueous binder composition and are subsequently dried.

11. Use according to Claim 9 or 10, **characterized in that** no catalysts are present in the aqueous binder composition.

## Revendications

1. Composition aqueuse de liant pour liaison de fibres, pouvant être obtenue par polymérisation radicalaire d'acétate de vinyle et d'éthylène, en présence de poly(alcool vinylique) en milieu aqueux, **caractérisée en ce qu'**on copolymérise en présence d'un poly(alcool vinylique) ayant un degré d'hydrolyse de 80 à 99 % en moles
a) 60 à 94 % en poids d'acétate de vinyle,
b) 5 à 30 % en poids d'éthylène,
c) 0,4 à 5 % en poids d'acrylamide et/ou de méthacrylamide,
d) 0,4 à 5 % en poids d'acide acrylique et/ou d'acide méthacrylique,
e) 0,2 à 2 % en poids d'anhydride maléique et/ou d'acide maléique,
les comonomères c) et e) étant éventuellement remplacés en totalité ou en partie par de l'acide maléamique,
les indications de % en poids étant chacune rapportées au poids total des comonomères, et leur somme totale étant de 100 % en poids.

2. Composition aqueuse de liant selon la revendication 1, **caractérisée en ce que**, a) on copolymérise 70 à 85 % en poids d'acétate de vinyle, par rapport au poids total des comonomères.

3. Composition aqueuse de liant selon la revendication 1 ou 2, **caractérisée en ce que** b) on copolymérise 15 à 28 % en poids d'éthylène, par rapport au poids total des comonomères.

4. Composition aqueuse de liant selon les revendications 1 à 3, **caractérisée en ce que** c) on copolymérise 0,5 à 2 % en poids d'acrylamide, par rapport au poids total des comonomères.

5. Composition aqueuse de liant selon les revendications 1 à 4, **caractérisée en ce que** d) on copolymérise 0,5 à 2 % en poids d'acide acrylique, par rapport au poids total des comonomères.

6. Composition aqueuse de liant selon les revendications 1 à 5, **caractérisée en ce que** e) on copolymérise 0,2 à 1 % en poids d'anhydride maléique, par rapport au poids total des comonomères.

7. Composition aqueuse de liant selon les revendications 1 à 6, **caractérisée en ce que** la proportion en poids comonomère c):comonomère d):comonomère e) est d'environ 1:1:(0,5 à 1) .

8. Composition aqueuse de liant selon les revendications 1 à 7, **caractérisée en ce qu'**on polymérise en présence d'un ou plusieurs poly(alcools vinyliques) ayant un degré d'hydrolyse de 80 à 99 % en moles et une viscosité Höppler en solution aqueuse à 4 % de 2 à 15 mPa.s (Méthode selon Höppler à 20 °C, DIN 53015).

9. Utilisation d'une composition aqueuse de liant selon les revendications 1 à 8 pour fabriquer des étoffes textiles.

10. Utilisation selon la revendication 9, les fibres étant mises en contact avec la composition aqueuse de liant puis étant séchées.

11. Utilisation selon la revendication 9 ou 10, **caractérisée en ce que** la composition aqueuse de liant ne contient aucun catalyseur.
